# EUROPÄISCHE PATENTSCHRIFT

(11) **EP 2 064 041 B1**
(45) Veröffentlichungstag und Bekanntmachung des Hinweises auf die Patenterteilung: **06.10.2010**
(21) Anmeldenummer: 07786411.4
(22) Anmeldetag: 19.07.2007
(51) Int. Cl.: B29C 33/10, B29C 33/38, B22F 3/11

(54) **VERFAHREN ZUR HERSTELLUNG EINER VULKANISIERFORM MIT MEHREREN ZU EINER UMFANGSMÄSSIG GESCHLOSSENEN FORM ZUSAMMENFÜGBAREN PROFILSEGMENTEN UND VULKANISIERFORM**
METHOD OF PRODUCING A VULCANIZING MOULD WITH A NUMBER OF PROFILE SEGMENTS THAT CAN BE JOINED TOGETHER TO FORM A CIRCUMFERENTIALLY CLOSED MOULD, AND VULCANIZING MOULD
PROCEDE DE FABRICATION D'UN MOULE DE VULCANISATION DOTE DE PLUSIEURS SEGMENTS PROFILES QUI PEUVENT ETRE ASSEMBLES EN UN MOULE A PERIPHERIE FERMEE, ET MOULE DE VULCANISATION

(30) Priorität: 08.09.2006 DE 102006042275
(43) Veröffentlichungstag der Anmeldung: 03.06.2009
(73) Patentinhaber: Continental Reifen Deutschland GmbH, 30165 Hannover (DE)
(72) Erfinder: KOMORNIK, Inna, 30827 Garbsen (DE); HASSELLÖF, Magnus, 30161 Hannover (DE)
(74) Vertreter: Finger, Karsten
(86) Internationale Anmeldenummer: PCT/EP2007/006701
(87) Internationale Veröffentlichungsnummer: WO 2008/028542

(56) Entgegenhaltungen:
- EP-A- 0 868 955
- WO-A-88/01927
- WO-A-98/19812
- DE-A1- 4 341 683
- US-B1- 6 254 998

## Beschreibung

Die Erfindung betrifft ein Verfahren zur Herstellung von Profilsegmenten einer Vulkanisierform und eine Vulkanisierform, insbesondere eine Reifenvulkanisierform, wobei mehrere Profilsegmente zu einer umfangsmäßig geschlossenen Form zusammenfügbar sind, welche jeweils aus einem Grundkörper bestehen, der innenseitig eine profilierte Formfläche aufweist, wobei zumindest Teile der Formfläche aus porösem, in einer Profilsegmentpressform verpresstem und erhitzten, vorzugsweise gesintertem Material hergestellt ist und wobei jedes Profilsegment ausgehend von dieser Formfläche mit durch das jeweilige Profilsegment sich nach außen erstreckenden Luftableitwegen versehen ist, wobei zumindest ein Teil der Luftableitwege wenigstens formflächenseitig aus einer Vielzahl an Mikrokanälen und miteinander in Verbindung stehenden Mikroporen besteht, wobei wenigsten 80 % der von Mikroporen gebildeten Mikrokanäle senkrecht zur Formfläche ausgerichtet sind.

In Reifenvulkanisierformen wird der auf den Reifenunterbau aufgebrachte Laufflächenstreifen aus Kautschukmaterial zu einem gewünschten Profil geformt und unter Wärmeeinwirkung zu Gummi vulkanisiert. Bei diesem Vorgang muss die zwischen Laufflächenstreifen und Formfläche vorhandene Luft abgeführt werden, um eine einwandfreie Ausformung des Reifenprofils zu gewährleisten. Bekannte Reifenvulkanisierformen weisen hierfür einerseits in ihrer Formfläche mündende Entlüftungskanäle oder - bohrungen auf, welche andererseits direkt oder über weitere Entlüftungskanäle an einer Außenfläche der Form münden. Die Form besteht dabei üblicherweise aus mehreren umfangsmäßig zusammenfügbaren Profilsegmenten mit je einer Formfläche, die bei zusammengesetzten Profilsegmenten zusammen mit seitlichen Formwänden die Gesamtform bilden, aus der sich die äußere Kontur des Luftreifens ergibt. Bei bekannten Profilsegmentsystemen werden die in der Formfläche der Profilsegmente mündenden Entlüftungskanäle durch gebohrte Ausnehmungen gebildet, in welche verschließbare Entlüftungsventile einsetzbar sind. Um eine ausreichende Entlüftung der Vulkanisierform, insbesondere auch in Nischen des Profils, zu gewährleisten, muss eine Vielzahl solcher Entlüftungskanäle, üblicherweise zwei- bis dreitausend, pro Vulkanisierform vorgesehen werden. Dies führt zu einem erheblichen Kosten- und Zeitaufwand für die Herstellung der Reifenvulkanisierform.

Ein weiterer Nachteil bekannter Profilsegmentsysteme besteht darin, dass beim Ausvulkanisieren des Fahrzeugluftreifens Kautschukmaterial in die Entlüftungskanäle gepresst bzw. gesogen werden kann. Die dadurch entstehenden Austriebe bleiben auf dem fertigen Fahrzeugluftreifen erhalten und müssen vor dessen Verwendung mit eigens dafür vorgesehenen Maschinen entfernt werden. Dieses sogenannte "Trimmen" führt zu einer Verlängerung und Verteuerung des Herstellungsprozesses des Fahrzeugluftreifens.

Aus der DE 43 41 683 A1 und der EP 0 868 955 A1 sind bereits Profilsegmente beschrieben, bei welchen zumindest die Formfläche aus einem gesinterten, porösen Material besteht. Material- und herstellungsbedingt weisen die Formflächen eine Vielzahl an Mikrokanälen und Mikroporen auf, welche miteinander in Verbindung stehen. Durch diese Mikrokanäle oder Mikroporen wird Luft abgeführt und formaußenseitig angeordneten zentralen Luftabfuhrkanälen größeren Durchmessers zugeführt. Diese Mikrokanäle oder Mikroporen weisen den Vorteil auf, dass kein Einsatz von Entlüftungsventilen bzw. das Ausführen von Entlüftungsausnehmungen nötig ist. Das Problem bereits bekannter Formen aus gesinterten Materialien besteht darin, dass herstellungsbedingt die Poren ungleichmäßig über den Querschnitt verteilt sind und sich die Porengröße nicht kontrolliert beeinflussen lassen. Oftmals konnte festgestellt werden, dass nach Fertigstellung des Sinterprozesses die Poren zusammengedrückt wurden und somit verloren gingen oder dass nur unbrauchbare Poren zu großen Durchmessers herzustellen waren. Es wird ein Formenherstellungsverfahren gefordert, welches eine definierte Poren/Kanalrichtungsverwirklichung, eine hohe Festigkeit, eine hohe relative Dichte und eine Umsetzung geringer Porengrößen zulässt.

In der bisher noch nicht veröffentlichten DE 10 2005 023 914.5 ist eine Reifenvulkanisierform und ein Verfahren zu deren Herstellung beschrieben, deren innenseitige Formfläche aus gesintertem Material besteht, deren Poren eine definierte Größe und Ausrichtung, insbesondere in Form von Kanälen, aufweist. Das Verfahren zur Herstellung einer solchen Formfläche erfolgt mittels des sog. "GASAR-Verfahrens", bei dem ein Metall in einem Ofen geschmolzen wird, der in einem Druckbehälter angeordnet ist, in welchem sich Wasserstoff befindet. Die gasgesättigte Schmelze wird in einen weiteren stark gekühlten Behälter geleitet, durch welche eine Richtungsverfestigung des geschmolzenen Metalls stattfindet. Die Richtungsverfestigung in Verbindung mit der gasgesättigten Schmelze führt zu einer Ausrichtung von Poren und zur Bildung von Mikrokanälen über den gesamten Querschnitt des Körpers. Die Porenmenge und -länge hängt jedoch sehr von den Materialeigenschaften ab und die Materialien mit guten Eigenschaften zur Ausbildung der Kanäle nach dem "GASAR-Verfahren" sind nicht besonders gut als Material für Vulkanisierungsformen geeignet. Außerdem sind die Poren nach der mechanischen Bearbeitung der Form, die notwendig ist, um Maß-, Form und Lagertoleranzen zu erreichen, oft "zugeschmiert". Hierdurch ist ein zusätzlicher Porenöffnungsvorgang z.B. durch Ätzen, notwendig.

In der Praxis hat sich daher gezeigt, dass weiterhin Bedarf an einem preisgünstigen Verfahren zur zuverlässigen Ausbildung von Mikrokanälen in Vulkanisierformen besteht.

Die Erfindung bezieht sich auf ein Verfahren zur Herstellung von Profilsegmenten einer Vulkanisierform gemäß dem Anspruch 1 und auf eine Vulkanisierform gemäß dem Anspruch 9.

Vorteilhafte Ausgestaltungen der Erfindung sind Gegenstand der abhängigen Ansprüche.

Aufgabe vorliegender Erfindung ist es, ein Verfahren zur Herstellung einer Vulkanisierform bereit zu stellen, welches preiswert ist, mit welchem Material mit hoher Dichte und hoher Festigkeit verarbeitet werden kann und mit dem Poren einer definierten, reproduzierbaren Größe und Ausrichtung in Form von Kanälen in den Profilsegmenten herstellbar sind. Die mittels des Verfahrens herzustellende Vulkansierform soll weiterhin für eine mechanische Bearbeitung geeignet sein, Druck- und Temperaturbeständig sein und keine Gegenwirkung mit Gummi aufweisen.

Diese Aufgabe wird mit einem Verfahren gelöst, bei dem man so vorgeht, dass man in jede Profilsegmentpressform zur Herstellung des porösen Bestandteils des Profilsegmentes eine Vielzahl an parallel zueinander ausgerichteten Bimaterialstangen derart anordnet, dass die Längsachsen der Bimaterialstangen in etwa senkrecht zur Formflächenoberfläche ausgerichtet sind, dass man Bimaterialstangen verwendet, die wenigstens aus einem längsachsparallelen Kern aus einem Füllmaterial bestehen, während die Kernummantelung des längsachsparallelen Kerns aus locker miteinander verbundenem Metallpulver besteht, dass man zum Erhalt eines grünen Profilsegmentteiles die Bimaterialstangen in der Profilsegmentpressform verpresst, dass man anschließend das grüne Teil einem Sinterprozess unterzieht, durch welchen nur das Füllmaterial entfernbar ist, so dass in etwa senkrecht zur Formfläche angeordnete Mikrokanäle verbleiben.

Eine Reifenvulkanisierform besteht aus mehreren zu einer umfangsmäßig geschlossenen Form zusammenfügbaren Profilsegmenten, welche zumeist aus einem Segmentgrundkörper bestehen, der innenseitig eine profilierte Formfläche aufweist, wobei zumindest Teile (Bereiche) der Formfläche oder die gesamte Formfläche aus porösem, gesinterten Material besteht. Die poröse Formfläche weist eine Vielzahl an definierten als Mikrokanäle ausgebildete Poren auf, die senkrecht auf der Formoberfläche stehend nach außen verlaufen und der Entlüftung der zwischen Laufflächenstreifen und Formoberfläche vorhandenen Luft während der Vulkanisation dienen.

Mit dem erfindungsgemäßen Herstellungsverfahren ist eine aus Profilsegmenten zusammenfügbare Vulkanisationsform geschaffen, mit der -aufgrund der Querschnittsgröße des Kernes des Stangenausgangsmaterials- eine definierte, ideale Porengröße erreichbar ist, die aufgrund des den Kern ummantelnden, das poröse Profilsegment bildenden Metallmateriales, vorzugsweise Stahl- oder Aluminium oder deren Legierungen, eine hohe Dichte und eine hohe Festigkeit aufweist. Durch dieses Verfahren weisen die Mikrokanäle eine definierte und reproduzierbare, in etwa senkrecht zur Formfläche weisende Ausrichtung auf, so dass Kanäle gebildet werden, die sich annähernd geradlinig von der Formoberfläche bis zur Rückenfläche des Formsegments erstrecken und der Entlüftung dienen. Dieses Verfahren ist mit Materialien ausführbar, welche den Anforderungen an eine Vulkanisationsform entsprechen und auch mechanisch nachzubearbeiten sind. Die Qualität der Reifen ist durch die Genauigkeit der sie formenden Profilsegmente verbessert.

Dieses Verfahren ist ebenfalls mit weiteren geeigneten Materialien wie beispielsweise keramischen Materialien oder Intermetallen mit geringem Kostenaufwand ausführbar.

Es kann das gesamte Profilsegment aus porösem Material bestehen, oder nur die profilierte Formfläche ist aus porösem Material gefertigt und als Einsatz oder als mehrere Einsätze in ein entsprechendes Profilsegment einsetzbar.

Das Ausgangsmaterial der Profilsegmente in Form der Bimaterialstangen wird vorteilhafterweise als ein Extrudatstrang extrudiert und der Strang zum Erhalt der Stangen in Strangstücke geeigneter Länge abgelängt.

Bei dem erfindungsgemäßen Verfahren können Bi- oder Mehrmaterialstangen, bestehend aus geeignet angeordneten Materialien eingesetzt werden, die einzeln hergestellt oder bereits in einem Verbund hergestellt werden.

Um größere Durchmesser für eine bessere Handhabbarkeit (Querschnitt, Länge) zu erlangen, können alternativ mehrere parallel zueinander angeordnete Bimaterialstangen vor Anordnung in der Profilsegmentpressform locker miteinander zu einem in etwa im Querschnitt runden Verband verpresst werden. In die Pressform werden dann mehrere Verbände an Bimaterialstangen eingebracht.

Das Kernmaterial der Bimaterialstangen ist während des Herstellungsprozesses beim Prozessschritt des Sinterns dann entfernbar, wenn man als Füllmaterial ein Material oder eine Materialmischung verwendet, die eine niedrigere Schmelz- Brenn- oder Verdampfungstemperatur als das den Kern ummantelnde Material hat.

Vorteilhafterweise wird für das Material der Formfläche sinterbares Stahl- oder sinterbares Aluminium(legierungs)pulver als ursprünglich den Kern ummantelndes Material der Bimaterialstange verwendet, um eine Reifenvulkanisationsform mit gefordert hoher Dichte und hoher Festigkeit zu erreichen.

Um Kanäle geeigneter Größe zu schaffen, ist es vorteilhaft, wenn die Bimaterialstange einen Durchmesser von 0,5mm bis 0,8mm aufweist und wenn der Kern der Bimaterialstange einen Durchmesser von 0,8mm bis 0,02mm, vorzugsweise von 0,05mm bis 0,02mm aufweist. Diese Porengröße hat sich als besondere vorteilhaft herausgestellt, da bei dieser Größe Luft schnell und sicher aus der Form abgeleitet werden kann, ohne dass Kautschuk in die Poren eindringt und die Luftkanäle verstopft. Weiterhin ist es vorteilhaft, wenn die Poren ca. nur 5% - 10% der Oberfläche belegen. Die Wärmeleitfähigkeit des Formenmaterials nur unwesentlich verändert. Das Ausformen des Reifens lässt sich hierdurch positiv beeinflussen, ebenso das Aussehen der Lauffläche des Fahrzeugluftreifens selbst. Ein vorbeschriebenes Formsegment ist beispielsweise ebenfalls mit entsprechender Konturgestaltung als Vulkanisierformteil der Reifenseitenwandbereiche einsetzbar.

Die Reifenvulkanisierform zeichnet sich insbesondere dadurch aus, dass die Porenoberfläche der Formflächenoberfläche in Abkehr zum Stand der Technik weniger als 15% der Gesamtoberfläche ausmacht. Hierdurch bleiben die für Vulkanisierformen, vorzugsweise Reifenvulkanisierformen, erforderlichen Materialeigenschaften wie beispielsweise Festigkeit und Wärmeleitfähigkeit erhalten.

Eine vorteilhafte Ausgestaltung der Vulkanisierform besteht darin, dass zumindest die Formfläche eine Vielzahl an voneinander beabstandeten Luftableitwegen aufweist, welche anstelle von und in ihrer Anordnung entsprechend zu herkömmlichen Entlüftungsventilen in der Vulkanisierform angeordnet sind und wobei jeder Luftableitweg aus einem Verbund von mikroporösen Mikrokanälen besteht. Es ist eine Vulkanisierform geschaffen, deren Segmente anstelle von herkömmlichen Entlüftungsventilen "Mikrokanaleinsätze" aufweisen. Jeder Mikrokanaleinsatz verläuft in etwa senkrecht zur Formenfläche und fluchtet mit dieser. Jeder einzelne Mikrokanal weist eine derart geringe Größe auf, dass das Kautschukmaterial des zu vulkanisierenden Reifens nicht in den Mikrokanal eindringen kann. Es ist eine Vulkanisierform geschaffen, die kostengünstig herzustellen ist, weil auf teure Ventile als Entlüftungseinsatz verzichtet werden kann. Ein Verstopfen der Entlüftungskanäle ist aufgrund der geringen Mikrokanalgröße ausgeschlossen. Die Querschnittsform des Verbundes aus mikroporösen Mirkokanälen, welcher den Entlüftungseinsatz bildet, kann rund, vier- oder vieleckig sein. Die Querschnittsgröße eines Entlüftungseinsatzes ist abhängig von der Anzahl an Entlüftungseinsätzen und der äußeren Gestaltung des Reifens.

Hergestellt werden kann eine vorbeschriebene Vulkanisierform, welche Mikrokanaleinsätze zur Entlüftung aufweist, derart, dass man eine Vielzahl an einzelnen Verbunden aus Bimaterialstangen gesondert sintert, dass man anschließend die erhaltenen Mikrokanal-Verbunde als Mikrokanaleinsätze in vorab eingebrachte, in etwa senkrecht zur Formenfläche und in diese mündend verlaufende Aussparungen eines Profilsegmentes anordnet, so dass quasi herkömmliche Entlüftungsventile in ihrer Funktion durch Mikrokanal-Entlüftungseinsätze ersetzt sind.

Der Einsatz und die Befestigung der Mikrokanalverbunde erfolgt in einem zweiten Schritt zeitlich nach dem Herstellen der Vulkanisierform.

Bei einem anderen Herstellungsverfahren der vorbeschriebenen Vulkanisierform erfolgt das Einbringen der Mikrokanaleinsätze gleichzeitig während des Herstellungsverfahrens der Vulkanisierform.

Weitere Merkmale, Vorteile und Einzelheiten der Erfindung werden anhand der Zeichnungen, die schematische Ausführungsbeispiele darstellen, näher erläutert. Es zeigen die:
- Fig. 1: einen Querschnitt durch eine Reifenvulkanisierform;
- Fig. 2: ein Ausführungsbeispiel eines porösen Profilsegmentteiles einer nach dem erfindungsgemäßen Verfahren hergestellten Reifenvulkanisierform im Radialschnitt;
- Fig. 3: die schematische Darstellung des Herstellungsverfahrens eines Profilsegmentes;
- Fig. 4: den Herstellungsschritt des Verpressens zum grünen Teil;
- Fig. 5: eine Aufsicht auf die Formflächenoberfläche, vergrößert;
- Fig. 6: eine weitere Vergrößerung der Aufsicht auf die Formflächenoberfläche;
- Fig. 7: einen Radialschnitt A-A' durch ein Profilsegment;
- Fig. 8: eine Aufsicht auf das Profilsegment der Fig. 7.

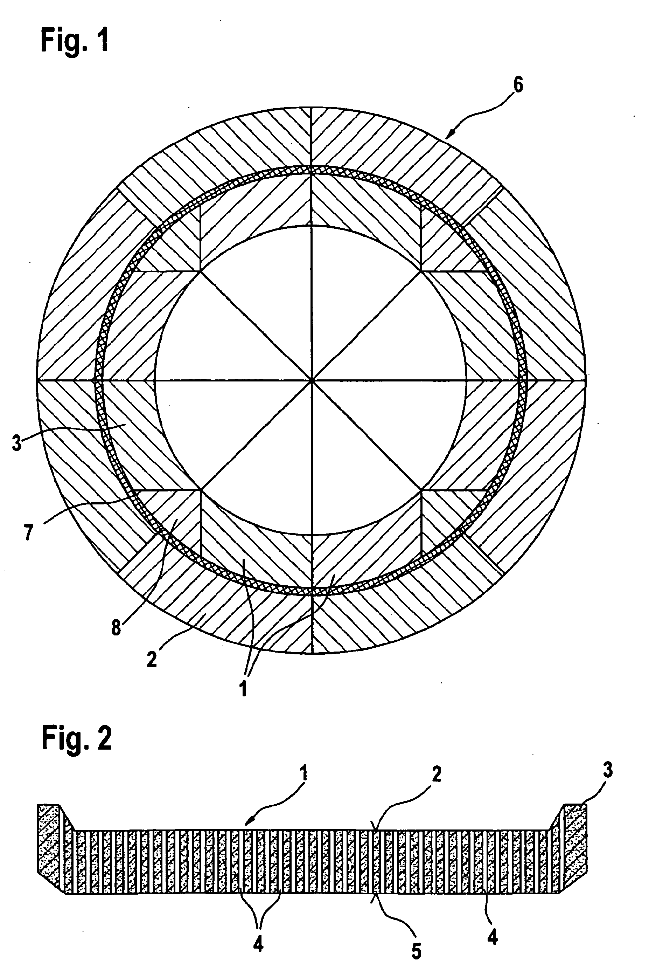

In **Figur 1** ist ein Ausführungsbeispiel einer Reifenvulkanisierform 6 im Querschnitt dargestellt. Die Reifenvulkanisierform 6 besteht aus mehreren Profilsegmenten 1, welche zu einer umfangsmäßig ringförmig geschlossenen Form zusammenfügbar sind und durch deren innere Formfläche 3 der zu vulkanisierende Reifen (nicht dargestellt) seine äußere Gestaltung, insbesondere seine Profilgestaltung erhält.

Ein jedes Profilsegment 1 besteht aus einem äußeren Grundkörper 2 und einer zwischen der radial innen angeordneten Formfläche 3 und dem Grundkörper 2 angeordneten Gitterstruktur 7. Durch diese Gitterstruktur 7 kann ein Heizmedium, insbesondere Wasserdampf geleitet werden, insbesondere derart, dass das Formsegment möglichst über die gesamte Breite und Länge gleichmäßig von Wasserdampf durchströmt werden kann, so dass das Formsegment schnell und gleichmäßig auf Temperatur gebracht werden kann. Zwischen der Gitterstruktur 7 und Formfläche 3 ist eine Verbindungselement 8 zum Zusammenhalten der Segmente angeordnet. Zumindest Teile bzw. Bereiche der Formfläche 3 sind als Bestandteil des Profilsegmentes 1 aus porösem, gesintertem Material. Die poröse Formfläche 3, siehe **Figur 2**, weist eine Vielzahl an definiert als Mikrokanäle 4 ausgebildete Poren auf, die im wesentlichen senkrecht auf der Formflächenoberfläche 3 stehend nach außen in Richtung Rückenfläche 5 verlaufen und der Entlüftung der zwischen Laufflächenstreifen und Formoberfläche vorhandenen Luft während der Vulkanisation dienen. Die Poren, welche die Kanalöffnung an der Formflächenoberfläche bilden, belegen in etwa nur 5% - 15% der Oberfläche, führen dennoch Luft zuverlässig ab. Präzise Formlinge sind zu erhalten. Indem zumindest die Formfläche 3 aus einer Vielzahl an parallel zueinander angeordneten Materialstangen 9 besteht, wobei jede Materialstange 9 einen längsachsparallelen Kern 10 aus einem während des Herstellungsprozesses entfernbarem Material aufweist und das den Kern umhüllende Material 11 ein Metall (-pulver) ist, welches während des Sinterprozessschrittes fest mit den Kernumhüllungen 11 der weiteren unmittelbar benachbarte Stangen 9 verbindbar ist, ist eine Reifenvulkanisierform geschaffen, die -aufgrund der gewählten Querschnittsformkerngröße des Stangenausgangsmaterials- eine definierte, ideale und reproduzierbare Porengröße erreicht, die aufgrund des den Hohlkern 10 ummantelnden Metallmateriales 11 eine hohe Dichte und eine hohe Festigkeit aufweist.

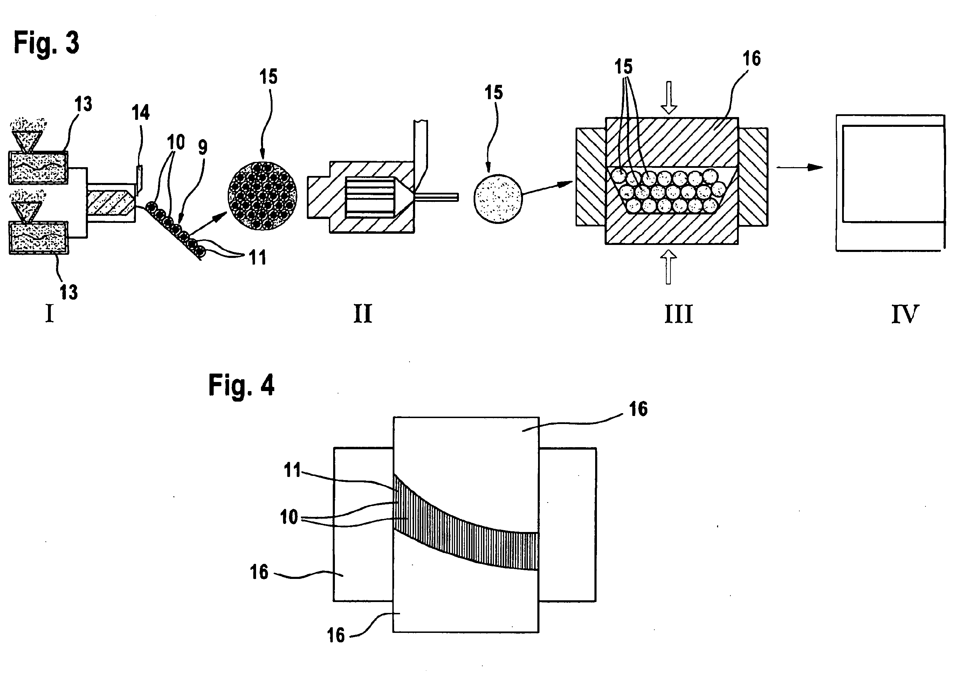

In der **Figur 3** ist das Verfahren zur Herstellung des porösen Profilsegmentes 1 schematisch dargestellt. In dem mit "I" gekennzeichneten Herstellungsschritt werden mittels eines geeigneten Extruders 12 Bimaterialstangen 9 produziert, indem dem Extruder 12 aus zwei Vorratsbehältern 13 zwei unterschiedliche Materialienpulver zugeführt werden, aus denen ein Strang 9 gepresst wird, der einen Kern 10 aus einem Füllmaterial oder eine Mischung verschiedener Materialien aufweist, das eine niedrigere Schmelz-, Brenn- oder Verdampfungstemperatur als das den Kern ummantelnde Material hat, welches während des das Herstellungsverfahren abschließenden Sintervorganges aus dem Stangenkern 10 entfernbar ist und der aus den Kern ummantelndem gesinterten und ausgehärteten Stahl- oder Aluminium(legierungs)pulver besteht und entsprechend der gewünschten Stangenlänge mittels einer Schneidvorrichtung 14 abgelängt wird. Eine Bimaterialstange 9 weist einen Durchmesser von 0,6mm auf, von dem der Kern 10 einen Durchmesser von 0,04mm einnimmt. Um Stangen 9 dieses geringen Durchmessers einfacher verarbeiten zu können, werden im Schritt "II" eine Anzahl von Bimaterialstangen 9 parallel zueinander zu einem im Querschnitt in etwa kreisrunden Stangenverbund 15 angeordnet. Eine Vielzahl dieser Stangenverbunde 15 ordnet man in einer Profilsegmentpressform 16 derart an, dass die Längsachsen der Bimaterialstangen 9 in etwa senkrecht zur radial inneren Formoberfläche 3 ausgerichtet sind, wobei die extrudierten Bimaterialstangen 9 einen längsachsparallelen Kern 10 aus einem Füllmaterial aufweisen, während die Kernummantelung 11 des längsachsparallelen Kerns aus Metallpulver besteht, dass man zum Erhalt eines grünen Teiles des Profilsegmentes die Bimaterialstangen in der Profilsegmentpressform 16 (Schritt III) verpresst, dass man anschließend das grüne Teil einem Sinterprozess unterzieht, durch welchen das Kern-Füllmaterial entfernt wird, während sich das Metallmantelmaterial zu einem stabilen Formling verbindet, so dass Mikrokanäle 4 definierter Größe und Ausrichtung senkrecht zur Formoberfläche 3 verbleiben.

Die Porosität des Formenmaterials ist durch die Menge und die Art des Füllmaterials und aufgrund der Sinterparameter festzulegen. Möglich ist es ebenfalls, den Kern aus einem porösen Schaum herzustellen und eine entsprechende Vulkanisierform zu erhalten.

In der **Figur 4** ist der Herstellungsschritt III der Figur 3 im Querschnitt vergrößert dargestellt.

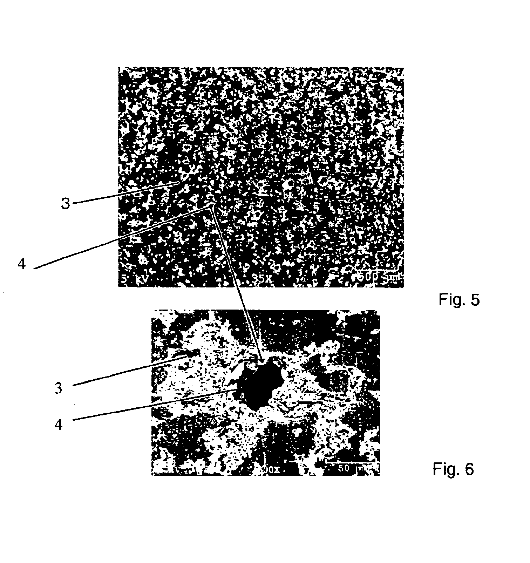

Die **Figur 5** zeigt eine Aufsicht (vergrößert) auf die Formflächenoberfläche (3) eines Segmentes einer Vulkanisierform mit Mikrokanälen (4). Die Mikrokanäle verlaufen in etwa in ihrer Ausdehnung senkrecht zur Formflächenoberfläche (3). Die Porenoberfläche liegt hier bei 9% der Gesamtoberfläche und ist somit sehr gering. Die **Figur 6** zeigt eine stärkere Vergrößerung eine Mikrokanals (4) und dessen unmittelbare diesen umgebende Formflächenoberfläche (3).

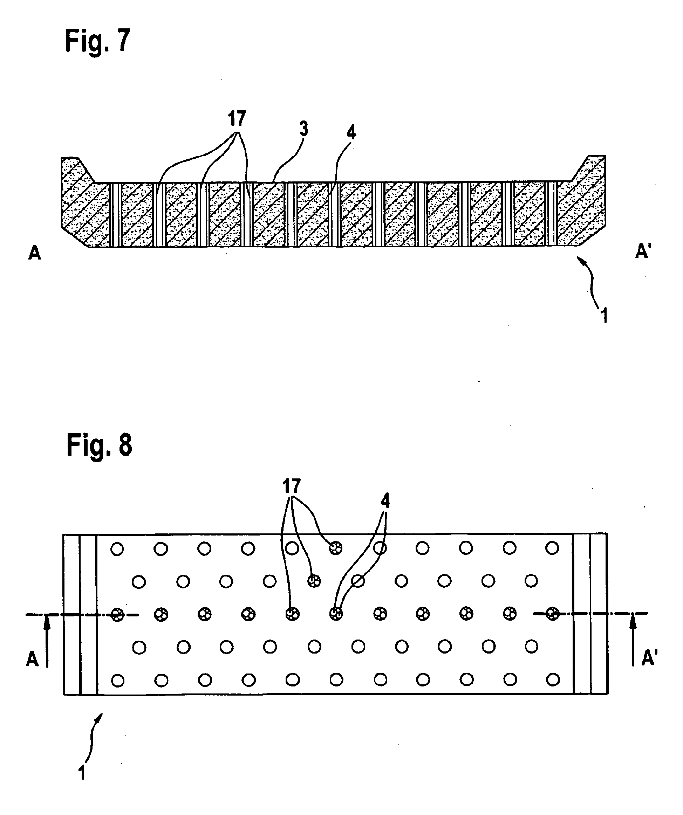

In der **Figur 7** ist ein Radialschnitt A - A' durch ein anderes Profilsegment 1 einer Vulkanisierform dargestellt. Das aus üblichen Werkstoffen hergestellte Profilsegment 1 zeichnet sich dadurch aus, dass eine Vielzahl von im Querschnitt runden Mikrokanaleinsätzen 17 senkrecht zur Formoberfläche 3 und mit dieser fluchtend angeordnet sind und Luftableitwege bilden. Die Formoberfläche 3 ist hier schematisch ohne Profilierung dargestellt. Die Mikrokanaleinsätze 17 sind anstelle von und in ihrer Anordnung entsprechend zu bisher verwendeten Entlüftungsventilen in herkömmlichen Vulkanisierformen angeordnet und übernehmen die Funktion der Luftabführung aus dem Innenraum der Vulkanisierform nach radial außen. Es dient quasi als poröses Entlüftungsventil. Jeder Mikrokanaleinsatz 17 besteht aus einem Verbund 15 aus mehreren parallel zueinander angeordneten Mikrokanälen 4. Jeder einzelne Mikrokanal 4 weist eine derart geringe Größe auf, dass das Kautschukmaterial des zu vulkanisierenden Reifens nicht in den Mikrokanal 4 eindringen kann. Es ist eine Vulkanisierform geschaffen, die kostengünstig herzustellen ist, weil auf teure Ventile als Entlüftungseinsatz verzichtet werden kann. Ein Verstopfen der Mikrokanäle ist aufgrund der geringen Mikrokanalgröße so gut wie ausgeschlossen. Es ist keine gesonderte Reinigung etwaiger Ventile notwendig. Die Vulkanisierform ist nur im Rahmen der üblichen Formreinigungszyklen zu reinigen. In der **Figur 8** ist eine Aufsicht auf die (hier ohne Profilierung dargestellte) Formoberfläche 3 des Profilsegmentes 1 der Figur 7 dargestellt. Die Mikrokanaleinsätze 17, welche anstelle der herkömmlichen Entlüftungsventile in dem Profilsegment 1 zur Abführung von Luft angeordnet sind, weisen einen runden Querschnitt auf. Die Querschnittsgröße eines Mikrokanaleinsatzes 17 ist abhängig von der Anzahl an Entlüftungseinsätzen und der äußeren Gestaltung des Reifens. Die Mikrokanaleinsätze 17 werden aus einem Verbund aus Bimaterialstangen in entsprechend benötigter Größe und Ausführung nach den in dieser Beschreibung offenbarten Verfahren hergestellt. Die Mikrokanaleinsätze sind in ihrer Größe und Anordnung in der Vulkanisierform derart ausgelegt, dass sie die aus dem Innenraum der Vulkanisierform abzuführende Luft nach radial außen abführen und können von Form zu Form variiert werden.

### Bezugszeichenliste

### (Teil der Beschreibung)

- 1: Profilsegment
- 2: Grundkörper
- 3: Formoberfläche
- 4: Mikrokanal
- 5: Rückenfläche
- 6: Reifenwlkanisierform
- 7: Gitterstruktur
- 8: Verbindungselement
- 9: Materialstange
- 10: Kern
- 11: Kernumhüllung
- 12: Extruder
- 13: Vorratsbehälter
- 14: Schneidvorrichtung
- 15: Stangenverbund
- 16: Profilsegmentpressform
- 17: Mikrokanaleinsatz

## Patentansprüche

1. Verfahren zur Herstellung von Profilsegmenten (1) einer Vulkanisierform, insbesondere einer Reifenvulkanisierform (6), wobei mehrere Profilsegmente (1) zu einer umfangsmäßig geschlossenen Form (6) zusammenfügbar sind, welche jeweils aus einem Grundkörper bestehen, der innenseitig eine profilierte Formfläche (3) aufweist, wobei zumindest Teile der Formfläche (3) aus porösem, in einer Profilsegmentpressform (16) verpresstem und gesintertem Material hergestellt ist und wobei jedes Profilsegment (1) ausgehend von dieser Formfläche (3) mit durch das jeweilige Profilsegment sich nach außen erstreckenden Luftableitwegen versehen ist, wobei zumindest ein Teil der Luftableitwege wenigstens formflächenseitig aus einer Vielzahl an Mikrokanälen (4) und miteinander in Verbindung stehenden Mikroporen besteht, wobei wenigsten 80 % der von Mikroporen gebildeten Mikrokanäle (4) senkrecht zur Formfläche (3) ausgerichtet sind,
**dadurch gekennzeichnet,**
**dass** man in jede Profilsegmentpressform (16) eine Vielzahl an parallel zueinander ausgerichteten Bimaterialstangen (9) derart anordnet, dass die Längsachsen der Bimaterialstangen (9) in etwa senkrecht zur Formflächenoberfläche (3) ausgerichtet sind,
**dass** man Bimaterialstangen (9) verwendet, die wenigstens aus einem längsachsparallelen Kern (10) aus einem Füllmaterial bestehen, während die Kernummantelung (11) des längsachsparallelen Kerns aus locker miteinander verbundenem Metallpulver besteht,
**dass** man zum Erhalt eines grünen Profilsegmentteiles (1) die Bimaterialstangen (9) in der Profilsegmentpressform (16) verpresst,
**dass** man anschließend das grüne Teil einem Sinterprozess unterzieht, durch welchen nur das Füllmaterial entfernbar ist, so dass in etwa senkrecht zur Formfläche (3) angeordnete Mikrokanäle (4) ausgehärtet verbleiben.

2. Verfahren nach Anspruch 1,
**dadurch gekennzeichnet,**
**dass** man extrudierte Bimaterialstangen (9) verwendet.

3. Verfahren nach Anspruch 2,
**dadurch gekennzeichnet,**
**dass** man mehrere Bimaterialstangen (9) vor Anordnung in der Profilsegmentpressform (16) miteinander locker zu einem Verbund (15) verpresst.

4. Verfahren nach einem der vorangehenden Ansprüche,
**dadurch gekennzeichnet,**
**dass** man als Ummantelungsmaterial Aluminium- oder Stahlpulver verwendet.

5. Verfahren nach einem der vorangehenden Ansprüche,
**dadurch gekennzeichnet,**
**dass** die Bimaterialstange einen Durchmesser von 0,5mm bis 0,8mm aufweist.

6. Verfahren nach Anspruch 5,
**dadurch gekennzeichnet,**
**dass** der Kern der Bimaterialstange einen Durchmesser von 0,02mm bis 0,08mm, vorzugsweise von 0,02mm bis 0,05 aufweist.

7. Verfahren nach einem oder mehreren der vorangehenden Ansprüche,
**dadurch gekennzeichnet,**
**dass** man eine Vielzahl an einzelnen Verbunden (15) aus Bimaterialstangen (9) gesondert sintert, dass man anschließend die erhaltenen Mikrokanal-Verbunde (15) als Mikrokanaleinsatz (17) in vorab eingebrachte, in etwa senkrecht zur Formenfläche und in diese mündende verlaufende Aussparungen eines Profilsegmentes anordnet.

8. Verfahren nach einem oder mehreren der vorangehenden Ansprüche 1-6,
**dadurch gekennzeichnet,**
**dass** man eine Vielzahl an einzelnen Mikrokanal-Verbunden (15) aus bereits gesinterten Bimaterialstangen (9) während des Vulkanisierformenherstellens in die Vulkanisierform derart einbringt, dass die fertige Vulkanisierform mikroporöse Mikrokanäle (4) anstelle von herkömmlichen Entlüftungsventilen aufweist, welche in der Formfläche münden.

9. Vulkanisierform, insbesondere Reifenvulkanisierform (6), bestehend aus Profilsegmenten (1), wobei mehrere Profilsegmente (1) zu einer umfangsmäßig geschlossenen Form (6) zusammenfügbar sind, welche jeweils aus einem Grundkörper bestehen, der innenseitig eine profilierte Formfläche (3) aufweist, wobei zumindest Teile der Formfläche (3) aus porösem, in einer Profilsegmentpressform (16) verpresstem und gesintertem Material hergestellt ist und wobei jedes Profilsegment (1) ausgehend von dieser Formfläche (3) mit durch das jeweilige Profilsegment sich nach außen erstreckenden Luftableitwegen versehen ist, wobei zumindest ein Teil der Luftableitwege wenigstens formflächenseitig aus einer Vielzahl an Mikrokanälen (4) und miteinander in Verbindung stehenden Mikroporen besteht, wobei wenigsten 80 % der von Mikroporen gebildeten Mikrokanäle (4) senkrecht zur Formfläche (3) ausgerichtet sind,
**dadurch gekennzeichnet,**
**dass** die Poren, welche die Kanalöffnung an der Formflächenoberfläche bilden, in etwa nur 15% oder weniger der Oberfläche belegen.

10. Vulkanisierform nach Anspruch 9,
**dadurch gekennzeichnet, dass** zumindest die Formfläche (3) eine Vielzahl an voneinander beabstandeten Luftableitwegen aufweist, welche anstelle von und in ihrer Anordnung entsprechend zu herkömmlichen Entlüftungsventilen in der Vulkanisierform (6) angeordnet sind und wobei jeder Luftableitweg ein Mikrokanaleinsatz (17) aus einem Verbund (15) von mikroporösen Mikrokanälen (4) besteht.

11. Vulkanisierform nach Anspruch 10,
**dadurch gekennzeichnet, dass** die Querschnittsform des Verbundes (15) aus mikroporösen Mirkokanälen rund, vier- oder vieleckig ist.

## Claims

1. Method of producing profile segments (1) of a vulcanizing mould, in particular a tire vulcanizing mould (6), wherein a number of profile segments (1) can be joined together to form a circumferentially closed mould (6), which segments respectively comprise a basic body which has a profiled forming area (3) on the inside, wherein at least parts of the forming area (3) are produced from porous material that is pressed in a profile segment pressing die (16) and sintered, and wherein each profile segment (1) is provided with air venting paths extending from this forming area (3) through the respective profile segment to the outside, wherein at least part of the air venting paths, at least on the forming area side, comprises a multiplicity of microchannels (4) and interconnected micropores, at least 80% of the microchannels (4) formed by the micropores being aligned perpendicularly to the forming area (3), **characterized in that** a multiplicity of bimaterial rods (9) that are aligned parallel to one another are arranged in each profile segment pressing die (16) in such a way that the longitudinal axes of the bimaterial rods (9) are aligned approximately perpendicularly to the forming area surface (3), **in that** bimaterial rods (9) that comprise at least a core (10) of a filling material parallel to the longitudinal axis are used, while the core surround (11) of the core that is parallel to the longitudinal axis consists of loosely bound-together metal powder, **in that** to obtain a green profile segment part (1) the bimaterial rods (9) are pressed in the profile segment pressing die (16) and **in that** the green part is subsequently subjected to a sintering process, by which only the filling material can be removed, so that microchannels (4) that are arranged approximately perpendicularly to the forming area (3) remain in a hardened form.

2. Method according to Claim 1, **characterized in that** extruded bimaterial rods (9) are used.

3. Method according to Claim 2, **characterized in that** a number of bimaterial rods (9) are loosely pressed together to form a group (15) before arrangement in the profile segment pressing die (16).

4. Method according to one of the preceding claims, **characterized in that** aluminium or steel powder is used as the surrounding material.

5. Method according to one of the preceding claims, **characterized in that** the bimaterial rod has a diameter of from 0.5 mm to 0.8 mm.

6. Method according to Claim 5, **characterized in that** the core of the bimaterial rod has a diameter of from 0.02 mm to 0.08 mm, preferably from 0.02 mm to 0.05 mm.

7. Method according to one or more of the preceding claims, **characterized in that** a multiplicity of individual groups (15) of bimaterial rods (9) are separately sintered, **in that** the groups of microchannels (15) obtained are subsequently arranged as microchannel inserts (17) in previously made clearances in a profile segment, extending approximately perpendicularly to the forming area and opening out into the latter.

8. Method according to one or more of the preceding Claims 1-6, **characterized in that** a multiplicity of individual groups of microchannels (15) comprising already sintered bimaterial rods (9) are introduced into the vulcanizing mould while the vulcanizing mould is being produced, in such a way that the finished vulcanizing mould has microporous microchannels (4) which open out into the forming area instead of conventional venting valves.

9. Vulcanizing mould, in particular a tire vulcanizing mould (6), comprising profile segments (1), wherein a number of profile segments (1) can be joined together to form a circumferentially closed mould (6), which segments respectively comprise a basic body which has a profiled forming area (3) on the inside, wherein at least parts of the forming area (3) are produced from porous material that is pressed in a profile segment pressing die (16) and sintered and wherein each profile segment (1) is provided with air venting paths extending from this forming area (3) through the respective profile segment to the outside, wherein at least part of the air venting paths, at least on the forming area side, comprises a multiplicity of microchannels (4) and interconnected micropores, at least 80% of the microchannels (4) formed by the micropores being aligned perpendicularly to the forming area (3), **characterized in that** the pores which form the channel opening on the forming area surface take up approximately only 15% or less of the surface area.

10. Vulcanizing mould according to Claim 9, **characterized in that** at least the forming area (3) has a multiplicity of spaced-apart air venting paths, which are arranged in the vulcanizing mould (6) instead of and corresponding in their arrangement to conventional venting valves, and each air venting path comprising a microchannel insert (17) made up of a group (15) of microporous microchannels (4).

11. Vulcanizing mould according to Claim 10, **characterized in that** the cross-sectional shape of the group (15) of microporous microchannels is round, rectangular or polygonal.

## Revendications

1. Procédé de formation de segments profilés (1) pour un moule de vulcanisation, en particulier pour un moule (6) de vulcanisation de bandage de roue, dans lequel :
plusieurs segments profilés (1) qui sont tous constitués d'un corps de base qui présente du côté intérieur une surface moulée profilée (3) peuvent être assemblés en un moule (6) dont la périphérie est fermée,
au moins des parties de la surface moulée (3) sont constituées d'un matériau poreux, sont comprimées dans un moule (16) de compression de segments profilés et sont frittées,
chaque segment profilé (1) est doté de parcours d'évacuation d'air qui partent de cette surface moulée (3) et qui s'étendent vers l'extérieur à travers chaque segment profilé,
au moins sur le côté de la surface du moule, au moins une partie des parcours d'évacuation d'air est constituée de plusieurs microcanaux (4) et de micropores communiquant les uns avec les autres et
au moins 80 % des microcanaux (4) formés par les micropores sont orientés perpendiculairement à la surface moulée (3),
**caractérisé en ce que**
dans chaque moule (16) de compression de segments profilés, on dispose plusieurs barreaux (9) en deux matériaux, orientés parallèlement les uns aux autres de telle sorte que les axes longitudinaux des barreaux (9) en deux matériaux soient orientés sensiblement à la perpendiculaire de la surface moulée (3),
**en ce que** l'on utilise des barreaux (9) en deux matériaux qui sont constitués au moins d'une âme (10) de matériau de charge parallèle à l'axe longitudinal tandis que l'enveloppe (11) de l'âme parallèle à l'axe longitudinal est constituée d'une poudre métallique dont les grains sont reliés lâchement les uns aux autres,
**en ce que** pour obtenir une partie crue (1) de segment profilé, les barreaux (9) en deux matériaux sont comprimés dans le moule (16) de compression de segment profilé et
**en ce qu'**ensuite, on fait subir à la partie crue une opération de frittage par laquelle seul le matériau de charge peut être enlevé de telle sorte que les microcanaux (4) disposés sensiblement à la perpendiculaire de la surface moulée (3) restent après avoir durci.

2. Procédé selon la revendication 1, **caractérisé en ce qu'**il utilise des barreaux (9) en deux matériaux extrudés.

3. Procédé selon la revendication 2, **caractérisé en ce que** l'on comprime lâchement les uns contre les autres plusieurs barreaux (9) en deux matériaux pour obtenir un composite (15) avant de les agencer dans le moule (16) de compression de segment profilé.

4. Procédé selon l'une des revendications précédentes, **caractérisé en ce que** comme matériau d'enveloppe, on utilise une poudre d'aluminium ou d'acier.

5. Procédé selon l'une des revendications précédentes, **caractérisé en ce que** les barreaux en deux matériaux ont un diamètre de 0,5 mm à 0,8 mm.

6. Procédé selon la revendication 5, **caractérisé en ce que** l'âme des barreaux en deux matériaux a un diamètre de 0,02 mm à 0,08 mm et de préférence de 0,02 mm à 0,05.

7. Procédé selon l'une ou plusieurs des revendications précédentes, **caractérisé en ce qu'**on fritte séparément plusieurs composites (15) distincts en barreaux (9) en deux matériaux et **en ce qu'**ensuite, les composites (15) à microcanaux ainsi obtenus sont disposés en tant que garnitures (17) de microcanaux dans des découpes d'un segment profilé préalablement formées, s'étendant sensiblement à la perpendiculaire de la surface moulée et débouchant dans cette dernière.

8. Procédé selon l'une ou plusieurs des revendications 1 à 6 qui précèdent, **caractérisé en ce que** pendant la fabrication au moule de vulcanisation, on amène dans le moule de vulcanisation plusieurs composites (15) distincts de microcanaux constitués de barreaux (9) en deux matériaux déjà frittés de telle sorte que le moule de vulcanisation prêt à l'emploi présente des microcanaux (4) microporeux au lieu des soupapes habituelles d'évacuation d'air qui débouchent dans la surface du moule.

9. Moule de vulcanisation, en particulier moule (6) de vulcanisation de bandage de roue constitué de segments profilés (1), dans lequel :
plusieurs segments profilés (1) qui sont tous constitués d'un corps de base qui présente du côté intérieur une surface profilée de moule (3) peuvent être assemblés pour former un moule (6) à périphérie fermée,
au moins des parties de la surface de moule (3) sont constituées d'un matériau poreux, comprimées dans un moule (16) de compression de segment profilé et frittées,
chaque segment profilé (1) est doté de parcours d'évacuation d'air qui partent de cette surface de moule (3), qui traversent chaque segment profilé et s'étendent vers l'extérieur,
au moins du côté de la surface du moule, au moins une partie des parcours d'évacuation d'air est constituée de plusieurs microcanaux (4) et de micropores communiquant les uns avec les autres et
au moins 80 % des microcanaux (4) formés par les micropores sont orientés perpendiculairement à la surface (3) du moule,
**caractérisé en ce que**
les pores qui forment l'ouverture des canaux à la surface du moule n'occupent qu'environ 15 % ou moins de la surface.

10. Moule de vulcanisation selon la revendication 9, **caractérisé en ce qu'**au moins la surface (3) du moule présente plusieurs parcours d'évacuation d'air situés à distance les uns des autres, disposés dans le moule de vulcanisation (6) en remplacement des soupapes habituelles d'évacuation d'air et agencés de la même manière que ces dernières et **en ce que** chaque parcours d'évacuation d'air est constitué d'une garniture (17) à microcanaux constituée d'un ensemble (15) de microcanaux (4) microporeux.

11. Moule de vulcanisation selon la revendication 10, **caractérisé en ce que** la forme de la section transversale de l'ensemble (15) de microcanaux microporeux est circulaire, rectangulaire ou polygonale.
